# EUROPEAN PATENT APPLICATION

(11) **EP 3 944 462 A1**
(43) Date of publication of application: **26.01.2022**
(21) Application number: 20778757.3
(22) Date of filing: 22.01.2020
(51) Int. Cl.: H02J 13/00, G08G 1/00, G08G 1/123, G01C 21/26, G06Q 50/06, G06Q 50/30, H02J 7/00, B60L 53/60

(54) **EV MANAGEMENT SYSTEM**

(30) Priority: 22.03.2019 JP 2019054115
(71) Applicant: Hitachi, Ltd., Tokyo 100-8280 (JP)
(72) Inventor: SUMI, Yukako, Tokyo 100-8280 (JP); AIKAWA, Makoto, Tokyo 100-8280 (JP); KUME, Isao, Tokyo 100-8280 (JP); OKUBO, Ryo, Tokyo 100-8280 (JP)
(74) Representative: MERH-IP Matias Erny Reichl Hoffmann Patentanwälte PartG mbB
(86) International application number: PCT/JP2020/002188
(87) International publication number: WO 2020/195067

(57) **Abstract**

An EV management system includes one or more processors, and one or more storage devices storing a program to be executed by the one or more processors. The one or more storage devices store charge/discharge request management information configured to manage charge/discharge requests from a plurality of chargers. Each of the charge/discharge requests indicates a location of a charger and a requested action specifying either charging an EV or discharging an EV. The one or more processors are configured to identify a destination of transport, select a first charge/discharge request of a first charger from the charge/discharge request management information based on the destination and the locations of the plurality of chargers, select a first EV for pursuing the transport to the destination from the plurality of EVs; and instruct the first EV to respond to the first charge/discharge request.

## Description

### CLAIM OF PRIORITY

The present application claims priority from Japanese patent application No. 2019-54115 filed on March 22, 2019, the content of which is hereby incorporated by reference into this application.

### BACKGROUND OF THE INVENTION

This invention relates to an EV management system.

The background art of this disclosure includes JP 2012-73979 A. JP 2012-73979 A discloses: From travel histories of EV vehicles collected from the EV vehicles managed, a use quantity distribution to vehicle use distances per time zone and a use prediction pattern showing a predicted transition of the use quantity per hour are obtained per regional mesh. Concerning the vehicles dispatched for each regional mesh, the dispatch quantity per time zone and a residual charge quantity distribution are obtained. Each vehicle is instructed to charge the battery or to wait, and the vehicle dispatch is arranged for each regional mesh in such a manner as to satisfy the dispatch quantity and the residual charge quantity distribution. Upon receiving a request of a getting-on location and a destination from a user, vehicles whose residual charge quantity can cover from the current location through the getting-on location and the destination to a charging station nearest the destination are extracted and a vehicle closest the getting-on location among the extracted vehicles is notified of the dispatch instruction (Abstract).

Patent Literature 1: JP 2012-73979 A

### SUMMARY OF THE INVENTION

Electric power supply in the past is one-way supply such that the electric power is generated in the upper stream (for example by hydropower, thermal power, and nuclear power) and distributed to the demanders (houses) in the lower stream through power lines. However, recent growth of power generation system represented by photovoltaics (PV) has propelled power generation by the demanders. Accordingly, the amount of electric power transmitted not only from the upper stream to the lower stream but also from the lower stream to other areas is increasing. However, the capacity of the power lines is limited and therefore, it will become tight in future. Enhancement of the facilities to increase the power transmission capacity is not easy; an attempt to transmit power without using power lines is encouraged.

The system according to JP 2012-73979 A determines whether each electric vehicle (EV) has remaining battery power enough to reach a charger near the destination of a user to efficiently dispatch an electric vehicle (EV) to meet the user's request under restrictions on charging and travel distance. However, JP 2012-73979 A does not disclose adjusting supply and demand of electric power across a plurality of areas by transporting electric power by EVs or a configuration required to pursue such adjustment.

An aspect of this disclosure is an electric vehicle (EV) management system configured to manage a plurality of EVs, the EV management system including: one or more processors; and one or more storage devices storing a program to be executed by the one or more processors, wherein the one or more storage devices store charge/discharge request management information configured to manage charge/discharge requests from a plurality of chargers, wherein each of the charge/discharge requests indicates a location of a charger and a requested action specifying either charging an EV or discharging an EV, and wherein the one or more processors are configured to: identify a destination of transport; select a first charge/discharge request of a first charger from the charge/discharge request management information, based on the destination and the locations of the plurality of chargers; select a first EV for pursuing the transport to the destination from the plurality of EVs; and instruct the first EV to respond to the first charge/discharge request.

An aspect of this disclosure enables adjustment of supply and demand of electric power across different areas without using power lines.

### BRIEF DESCRIPTION OF THE DRAWINGS

FIG. 1 illustrates a configuration example of a matching system;
FIG. 2 illustrates a configuration example of an EV management system;
FIG. 3 is a sequence diagram of collecting information on EV taxis and chargers;
FIG. 4 provides a configuration example of one charge/discharge request to be sent from a charger information service system to the EV management system;
FIG. 5 provides a configuration example of EV information about one EV;
FIG. 6 provides a configuration example of a charge/discharge request list table;
FIG. 7 provides a configuration example of an EV information list table;
FIG. 8 is a sequence diagram of dispatching an EV taxi;
FIG. 9 provides an example of an image for requesting a ride;
FIG. 10 provides a configuration example of a request for a ride;
FIG. 11A is a flowchart of an example of processing of a matching module;
FIG. 11B is a detailed flowchart of creating a request acceptable EV list table about a charge request;
FIG. 11C is a detailed flowchart of creating a request acceptable EV list table about a discharge request;
FIG. 12 illustrates an example of a dispatchable EV list table;
FIG. 13A provides an example of the image of a notice of no dispatchable taxi to be displayed on a smart device;
FIG. 13B provides another example of the image of a notice of no dispatchable taxi to be displayed on a smart device;
FIG. 14 provides an example of a notice of dispatch to be sent to a smart device;
FIG. 15 provides an example of the image of a notice of dispatch to be displayed on a smart device based on a received notice of dispatch;
FIG. 16 provides an example of a dispatch command to be sent to an EV on-board device;
FIG. 17 provides an example of a navigation image an EV on-board device creates and displays in accordance with a dispatch command;
FIG. 18 provides a configuration example of a request acceptable EV list table (charge);
FIG. 19 provides a configuration example of a request acceptable EV list table (discharge);
FIG. 20 provides an example of a dispatch command to be sent from an information sending module to an EV on-board device in the case of charge;
FIG. 21 provides another example of a navigation image an EV on-board device creates and displays in accordance with a dispatch command;
FIG. 22 provides an example of a notice of charge/discharge to be sent to a charger information service system in the case of charge;
FIG. 23 is a flowchart of an example of processing of a charge/discharge profit calculation module;
FIG. 24 provides a configuration example of an EV profit list table;
FIG. 25 provides a configuration example of a passenger record information list table;
FIG. 26 provides an example of a daily-average-profit-per-passenger record list table;
FIG. 27A is a flowchart of matching an EV and chargers in response to a discharge request of a charger in Embodiment 2 so that the EV can discharge to the charger and subsequently charge from another charger;
FIG. 27B is a flowchart of matching an EV and chargers in response to a discharge request of a charger in Embodiment 2 so that the EV can discharge to the charger and subsequently charges from another charger;
FIG. 28 provides a configuration example of a candidate EV list table in Embodiment 2;
FIG. 29 provides a configuration example of a request acceptable EV list in Embodiment 2;
FIG. 30 provides an example of a notice of charge/discharge to be sent from an information sending module to a charger information service system when an EV to be dispatched is selected in Embodiment 2;
FIG. 31 provides an example of a dispatch command to be sent from the information sending module to an EV on-board device in the case of discharge and charge in Embodiment 2; and
FIG. 32 provides an example of a navigation image in Embodiment 2 to be displayed on the EV on-board device in accordance with a dispatch command.

### DETAILED DESCRIPTION OF THE EMBODIMENTS

Hereinafter, embodiments of this invention will be described with reference to the accompanying drawings. It should be noted that the embodiments are merely examples to implement the invention and not to limit the technical scope of the invention.

Disclosed herein is adjusting the supply and demand of electric power with electric vehicles (EVs). The system of this disclosure allocates EVs to transport electric power from an area having lower demand to an area having higher demand. The system controls the allocation of EVs so that an EV for transporting a person or an object to some destination will charge or discharge a charger close to the destination. This configuration efficiently adjusts the supply and demand of electric power across areas while transporting a person or an object.

### EMBODIMENT 1

### System Configuration

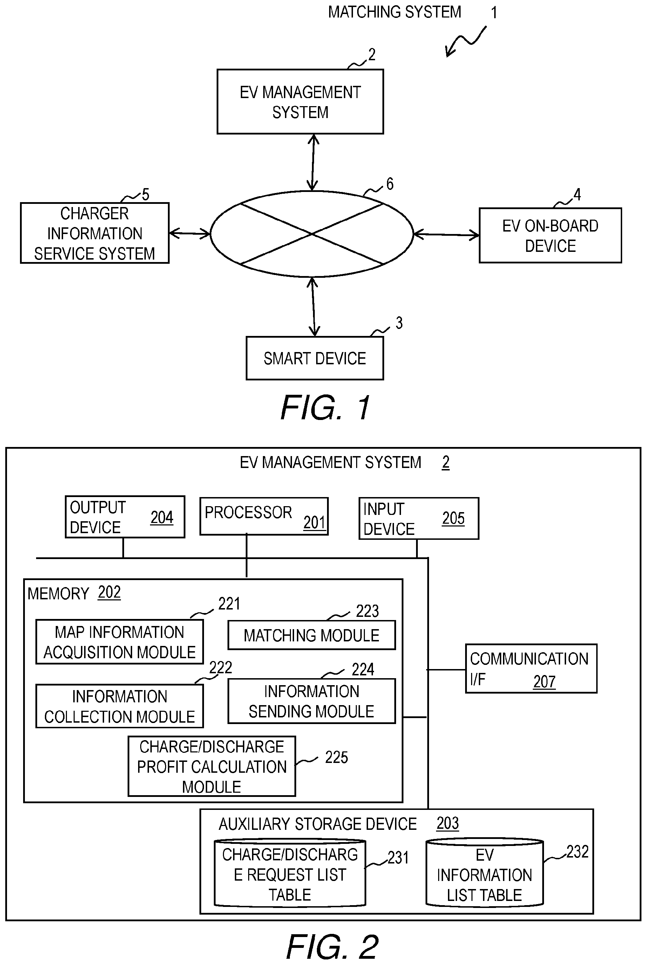

Hereinafter, a matching system in an embodiment is described. FIG. 1 illustrates a configuration example of a matching system 1. The matching system 1 includes an EV management system 2, a smart device 3, an EV on-board device 4, and a charger information service system 5; they can communicate with one another via a network 6.

The smart device 3 is a device to be used by a user of an EV taxi. The user requests a ride through the smart device and receives a response to the request. The EV management system 2 manages a large number of EV taxis and dispatches an EV taxi in response to the user's request for a ride. The EV on-board device 4 is a device mounted on an EV taxi and communicates with the EV management system 2. Although FIG. 1 shows one EV on-board device 4 by way of example, the actual system includes a large number of EV on-board devices 4. The EV taxi in the example described herein is driven by a driver but the features of this disclosure are applicable to a self-driving EV.

The charger information service system 5 manages information on EV chargers (not-shown) within a management area. Each EV charger in this embodiment is capable of charging and discharging an EV (discharging and charging the EV charger). More specifically, the charger information service system 5 consolidates information from every EV charger about whether to request charging an EV from the charger (discharging the charger) or discharging an EV to the charger (charging the charger) depending on the status of the supply and demand of electric power in the area including the charger.

FIG. 2 illustrates a configuration example of the EV management system 2. The EV management system 2 can have a common computer configuration. The EV management system 2 includes a processor 201, a memory (primary storage device) 202, an auxiliary storage device 203, an output device 204, an input device 205, and a communication interface (I/F) 207. These constituent elements are interconnected by a bus. The memory 202, the auxiliary storage device 203, or the combination of these is a storage device.

The memory 202 can be a semiconductor memory and is mainly used to hold programs being executed and data. The processor 201 performs a variety of processing in accordance with the programs stored in the memory 202. The processor 201 operates in accordance with the programs to implement various function units. The auxiliary storage device 203 can be a large-capacity storage device such as a hard disk drive or a solid-state drive; it is used to hold programs and data on a long-term basis.

The processor 201 can be one or more processing units and include one or more computing units or a plurality of processing cores. The processor 201 can be implemented as one or more central processing units, microprocessors, microcomputers, microcontrollers, digital signal processors, state machines, logic circuits, graphic processing units, chip-on systems, and/or any device that operates a signal in accordance with control instructions.

The programs and data stored in the auxiliary storage device 203 are loaded to the memory 202 at the start-up or when needed and the programs are executed by the processor 201 to perform a variety of processing of the EV management system 2. Accordingly, the processing performed by the EV management system 2 is processing performed by the processor 201 or programs.

The input device 205 is a hardware device for the user to input instructions and information to the EV management system 2. The output device 204 is a hardware device for presenting images for input and output, such as a display device or a printing device. The communication I/F 207 is an interface for connecting to the network 6. The input device 205 and the output device 204 are optional and the EV management system 2 can be accessed from a terminal via a network.

The functions of the EV management system 2 can be implemented in a computer system that includes one or more computers equipped with one or more processors and one or more storage devices including a non-transitory storage medium. The computers communicate with one another via a network. For example, a part of the functions of the EV management system 2 can be implemented in one computer and another part can be implemented in another computer.

The smart device 3, the EV on-board device 4, the charger information service system 5 can have a computer configuration, like the EV management system 2. For example, the functions of the EV on-board device 4 and the charger information service system 5 can be implemented in a computer system that includes one or more computers equipped with one or more processors and one or more storage devices including a non-transitory storage medium.

The memory 202 of the EV management system 2 stores a map information acquisition module 221, an information collection module 222, a matching module 223, an information sending module 224, and a charge/discharge profit calculation module 225. These are programs including command codes to be executed by the processor 201. The memory 202 further stores a not-shown operating system and temporary tables for matching. The details of the processing of each program will be described later.

The auxiliary storage device 203 stores a charge/discharge request list table 231 and an EV information list table 232. The charge/discharge request list table 232 is an example of charge/discharge request management information for managing charge/discharge requests. The EV information list table 232 is an example of EV management information for managing EVs. The details of these tables will be described later.

In FIG. 2, software elements are shown in the auxiliary storage device 203 or the memory 202 for convenience of illustration; however, those elements can be stored in any areas of the storage devices. As described above, the processor 201 operates in accordance with a specific program to work as a specific function unit. For example, the processor 201 works as a map information acquisition unit, an information collector, a matching unit, an information sender, and a charge/discharge profit calculator in accordance with the aforementioned programs.

### Collecting Information

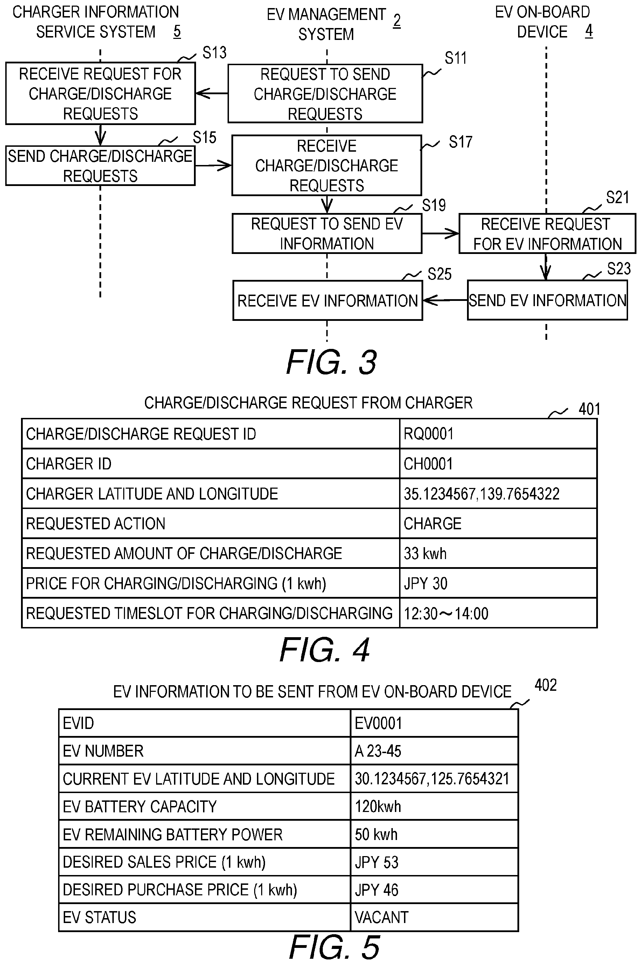

Processing of the EV management system 2 to collect information on EV taxis and chargers is described. FIG. 3 is a sequence diagram of collecting such information. The information collection module 222 of the EV management system 2 requests the charger information service system 5 to send charge/discharge requests (S11). The charger information service system 5 receives the request for charge/discharge requests (S13) and in response, sends charge/discharge requests of a plurality of chargers to the EV management system 2 (S15). The EV management system 2 receives the charge/discharge requests from the charger information service system 5 (S17).

FIG. 4 provides a configuration example of one charge/discharge request to be sent from the charger information service system 5 to the EV management system 2. The charge/discharge request is a request from one charger to request charge or discharge. The charge/discharge request 401 includes information of a charge/discharge request ID, a charger ID, a charger latitude and longitude, a requested action, a requested amount of charge/discharge, a price for charging/discharging, and a requested timeslot for charging/ discharging.

The charge/discharge request ID is an ID for identifying the charge/discharge request; the charger ID is an ID for identifying a charger; the charger latitude and longitude indicates the latitude and longitude of the location where the charger is placed. The requested action indicates whether the request is for charging an EV or discharging an EV. The requested amount of charge/discharge indicates the amount of electric power requested to charge or discharge.

The price for charging/discharging indicates the price of electric power in charging or discharging an EV and in this example, the price per kilowatt-hour. In the case of discharging an EV to a charger, the fee is paid to the EV. In the case of charging an EV from a charger, the fee is paid from the EV to the charger. The requested timeslot for charging/discharging indicates the timeslot in which the requested charge or discharge is to be performed.

Although this example is configured so that the charger information service system 5 manages information about chargers and sends the information to the EV management system 2, the EV management system 2 can acquire charger information from individual chargers.

Returning to FIG. 3, the information collection module 222 of the EV management system 2 requests each EV on-board device 4 to send EV information (S19). The EV on-board device 4 receives the EV information request (S21) and in response, sends EV information to the EV management system 2 (S23). The EV management system 2 receives the EV information (S25).

FIG. 5 provides a configuration example of EV information 402 about one EV. The EV information 402 includes information of an EV ID, an EV number, a current EV latitude and longitude, an EV battery capacity, an EV remaining battery power, a desired sales price, a desired purchase price, and an EV status. The EV ID indicates the ID for identifying the EV; the EV number indicates a number for identifying the EV; and the current EV latitude and longitude indicates the latitude and longitude of the current location of the EV.

The EV battery capacity indicates the battery capacity of the EV; the EV remaining battery power indicates the amount of electric power currently remaining in the battery. The desired sales price indicates a desired price in selling electric power from the EV to a charger; the desired purchase price indicates a desired price in buying electric power from a charger. The prices in this example are prices per kilowatt-hour. The desired sales price and the desired purchase price can be common prices in a taxi company or different prices among taxis; the taxi company or individual taxi drivers can determine the prices. The EV status is the current status of the EV. Examples of the EV status include "VACANT", "CHARGING", "OCCUPIED", and "DEADHEADING" .

The information collection module 222 of the EV management system 2 collects charge/discharge requests 401 and EV information 402 as necessary. The example in FIG. 3 is configured so that the charger information service system 5 and the EV on-board devices 4 respond to requests from the EV management system 2, but the charger information service system 5 and/or the EV on-board devices 4 can send updated information to the EV management system 2 without being requested.

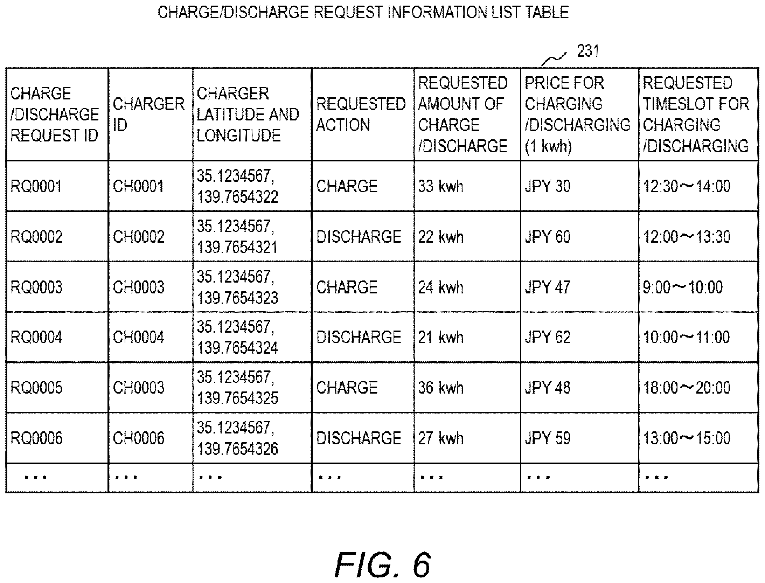

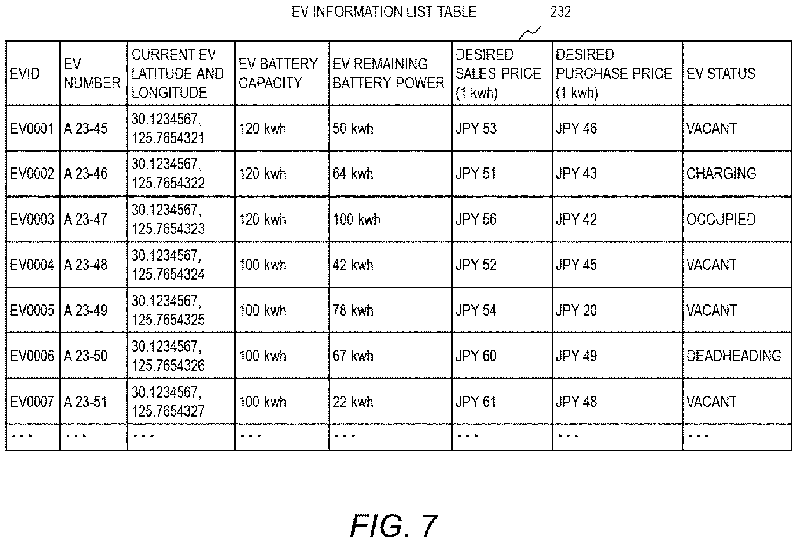

The information collection module 222 of the EV management system 2 updates the charge/discharge request list table 231 with the collected charge/discharge requests 401. The information collection module 222 of the EV management system 2 further updates the EV information list table 232 with the collected EV information 402. FIG. 6 provides a configuration example of the charge/discharge request list table 231 and FIG. 7 provides a configuration example of the EV information list table 232.

As shown in FIG. 6, the charge/discharge request list table 231 is a list of charge/discharge requests 401 received from a plurality of chargers. The information items in the charge/discharge request list table 231 are the same as those in a charge/discharge request 401. As shown in FIG. 7, the EV information list table 232 is a list of EV information 402 received from a plurality of EV on-board devices 4. The information items in the EV information list table 232 are the same as those in EV information 402. The charge/discharge request list table 231 and the EV information list table 232 store the latest information updated as needed.

### Accepting Request for Ride

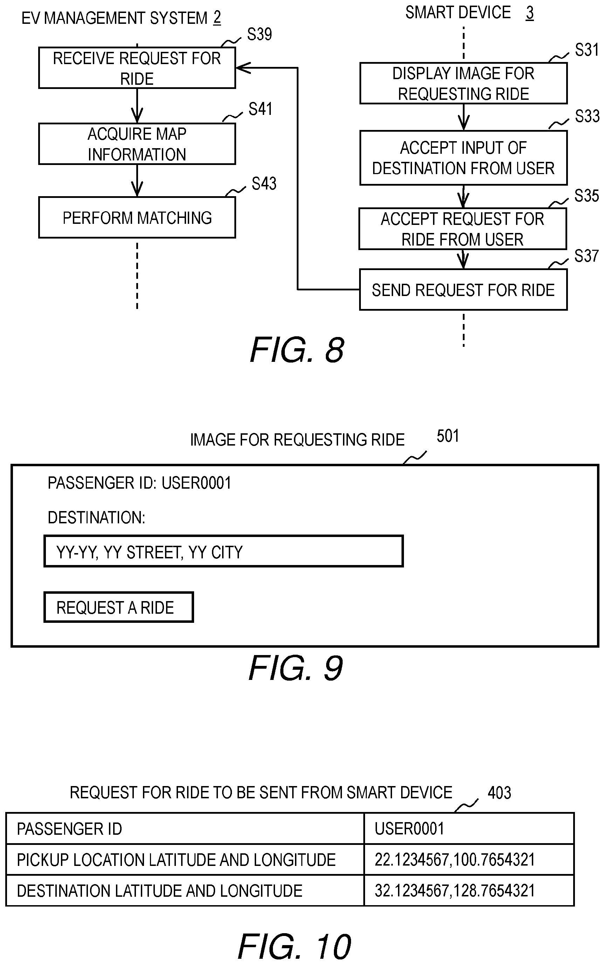

Next, processing to accept a request for a ride from an EV taxi user is described. FIG. 8 is a sequence diagram of dispatching an EV taxi. An EV taxi user requests a ride through the user's smart device 3. Specifically, the smart device 3 displays an image for requesting a ride (S31).

FIG. 9 provides an example of the image 501 for requesting a ride. The image 501 for requesting a ride includes a field for inputting the destination and a request-a-ride button. The smart device 3 receives the input of the destination through its input device (for example, a touch panel) (S33) and further, receives a request for a ride through the request-a-ride button being selected (S35).

The smart device 3 determines the current latitude and longitude of the smart device 3 with a GPS system and further, calculates the latitude and longitude of the destination input by the EV taxi user. The smart device 3 creates a request for a ride including the current location of the smart device 3 as a pickup location and information on the destination and sends the request to the EV management system 2 (S37).

FIG. 10 provides a configuration example of the request for a ride 403. A request for a ride 403 includes information of a passenger ID, a pickup location latitude and longitude, and a destination latitude and longitude. The passenger ID is an ID for identifying a passenger. The pickup location latitude and longitude is the latitude and longitude of the current location of the smart device 3 and the destination latitude and longitude is the latitude and longitude of the destination. The latitude and longitude of a pickup location and a requested time of pickup (estimated time of pickup) can be specified by the EV taxi user.

The information collection module 222 of the EV management system 2 receives the request for a ride 403 (S39). The information collection module 222 forwards the request for a ride 403 to the map information acquisition module 221 together with an instruction to collect map information. The map information acquisition module 221 acquires map information from the pickup location to the destination from an external system (S41). The map information includes traffic information. The matching module 223 matches an EV taxi and a charger to the request for a ride 403 (S43).

Specifically, the matching module 223 determines a combination of an EV taxi to be dispatched and a charger to charge/discharge (charge or discharge) the EV taxi based on the request for a ride 403, the map information, the charge/discharge request list table 231, and the EV information list table 232. Only an EV taxi without a charger may be selected.

### Matching

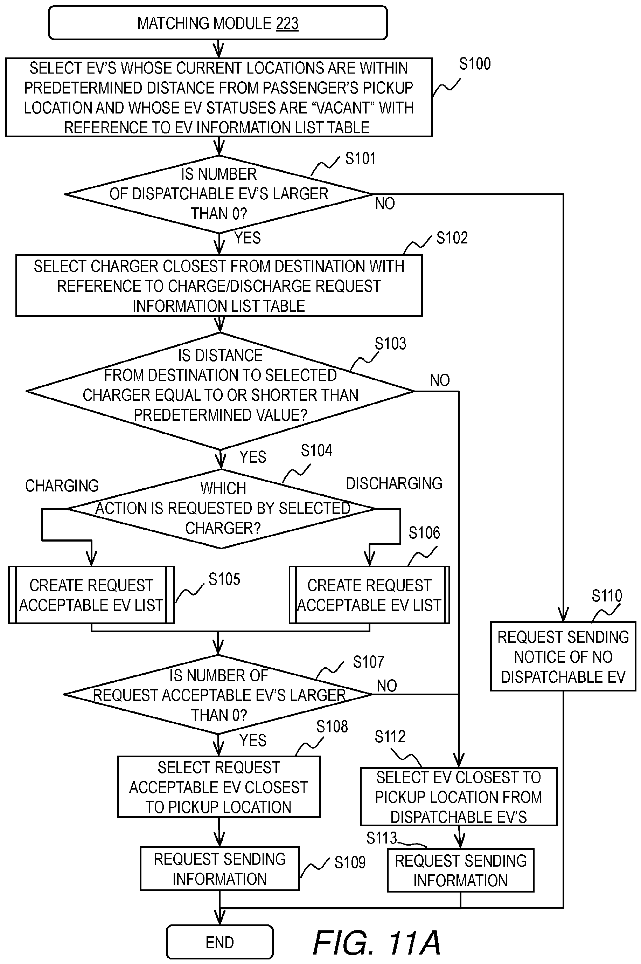

Hereinafter, an example of the processing of the matching module 223 is described. FIG. 11A is a flowchart of an example of processing of the matching module 223. The matching module 223 selects EVs whose current locations are within a predetermined distance from the pickup location of the EV user (passenger) indicated in the request for a ride 403 and whose statuses are "VACANT" as dispatchable EVs with reference to the EV information list table 232 (S100).

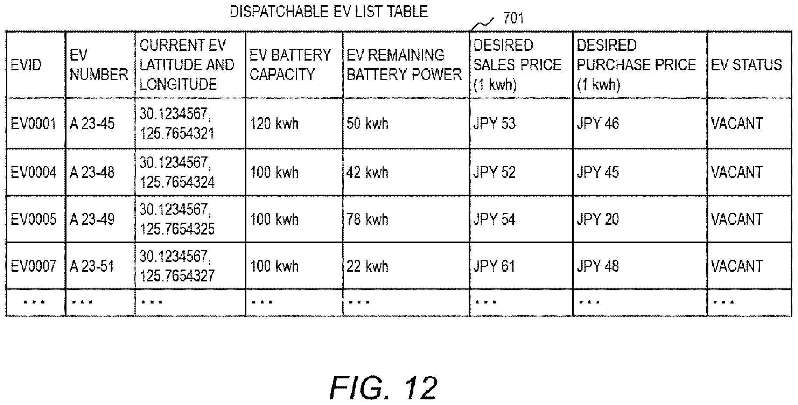

The matching module 223 selects the records of the dispatchable EVs from the EV information list table 232, creates a dispatchable EV list, and stores the created list to the memory 202. FIG. 12 provides an example of the dispatchable EV list table 701. The distance is a pathway distance from the current EV location to the pickup location calculated from the longitudes and latitudes of the current EV location and the pickup location with reference to the map information.

If the number of dispatchable EVs is 0, (S101: NO), for example in the case where there is no vacant EV taxi or all EV taxis under the management are far from the passenger's pickup location, the matching module 223 requests the information sending module 224 to send a notice of no dispatchable taxi (S110). The information sending module 224 sends a notice of no dispatchable taxi to the smart device 3 that has sent the request for a ride 403. The information sending unit 224 does not send any notice to the EV on-board device 4 or the charger information service system 5.

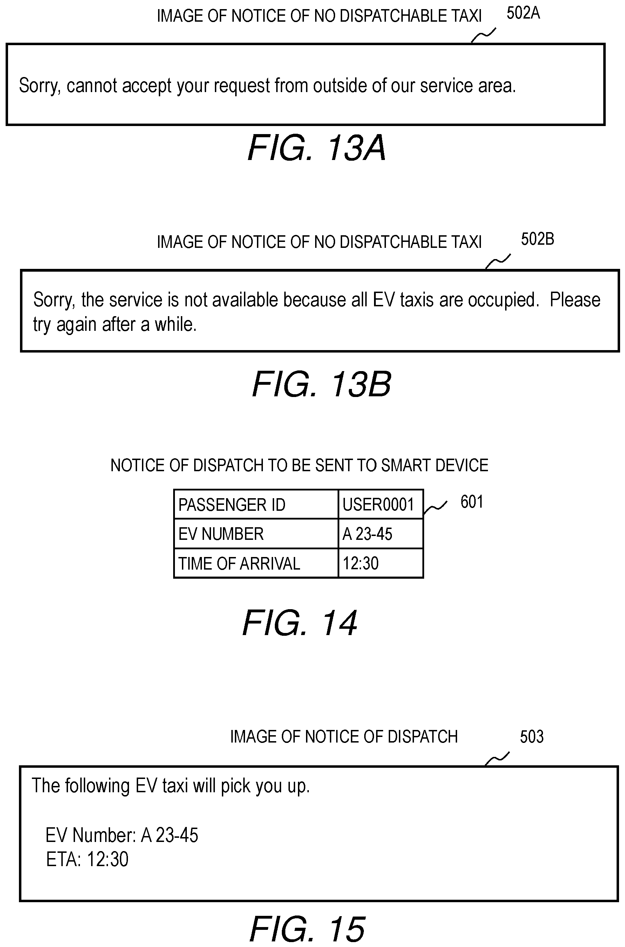

FIG. 13A provides an example of an image 502A of a notice of no dispatchable taxi to be displayed on the smart device 3 when all taxis under the management are far from the pickup location. FIG. 13B provides an image 502B of a notice of no dispatchable taxi to be displayed on the smart device 3 when there is no vacant EV taxi. The images 502A and 502B of notices of no dispatchable taxi include a statement of the fact that no taxi meets the request for a ride 403 and its reason, for example. The notice of no dispatchable taxi to be responded to the smart device 3 includes, for example, the passenger ID included in the request for a ride 403 and the message to be displayed in the image but does not include information on dispatch of an EV.

Returning to FIG. 11A, if the number of dispatchable EVs is larger than 0 (S101: YES), the matching module 223 selects the charger located at the shortest distance from the destination specified in the request for a ride 403 with reference to the charge/discharge request list table 231 (S102). This configuration minimizes the interference with the service of the EV taxi.

The matching module 223 determines whether the distance from the destination to the selected charger is equal to or shorter than a predetermined value (S103). The distance is a pathway distance from the destination to the charger calculated from the longitudes and latitudes of the destination and the charger based on the map information.

If the distance from the destination to the charger is longer than the predetermined value (S103: NO), the matching module 223 selects the EV taxi closest to the pickup location from the dispatchable EV list table 701 (S112). In this case, charging or discharging the dispatched EV is not performed with the charger. The matching module 223 requests the information sending module 224 to send necessary information (S113).

In response to the request at Step S113, the information sending module 224 sends information to the EV on-board device 4 of the EV to be dispatched and the smart device 3 that has sent the request for a ride 403. FIG. 14 provides an example of a notice of dispatch 601 to be sent to the smart device 3. The notice of dispatch 601 includes a passenger ID, an EV number, and a time of arrival. The passenger ID is the ID of the passenger who is requesting for a ride; the EV number is the number of the EV to be dispatched; and the time of arrival is the estimated time of arrival (ETA) when the dispatched EV will arrive at the pickup location. The information sending module 224 acquires information to be included in the notice of dispatch 601 from the matching module 223.

FIG. 15 provides an example of an image 503 of a notice of dispatch to be displayed on the smart device 3 based on the notice of dispatch 601. The smart device 3 can check that the notice of dispatch 601 is the response to the request for a ride sent from this smart device 3 with reference to the passenger ID in the notice of dispatch 601. The image 503 of a notice of dispatch includes the number and the ETA of the EV taxi to be dispatched. The passenger can identify the EV taxi to be used.

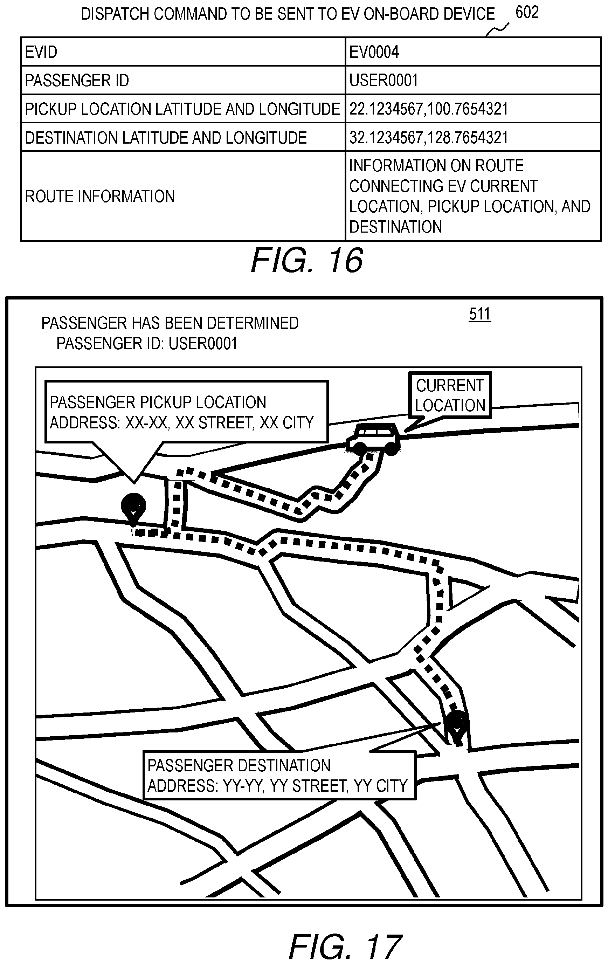

FIG. 16 provides an example of a dispatch command 602 to be sent to the EV on-board device 4. It includes the EV ID of the EV to receive the command, the passenger ID, the latitude and longitude of the pickup location, the latitude and longitude of the destination, and the route information. The route information includes information on the route connecting the current location of the EV, the pickup location, and the destination. The information sending module 224 acquires information to be included in the dispatch command 602 from the matching module 223. The EV on-board device 4 can check that the received dispatch command 602 is for this EV with reference to the EV ID. The example in FIG. 16 is for a case where charging/discharging the EV is not performed. Accordingly, the dispatch command 602 includes information on the pickup location and destination of the passenger and the route but does not include information about a charger.

FIG. 17 provides an example of the navigation image 511 the EV on-board device 4 creates and displays in accordance with the dispatch command 602. The navigation image 511 shows the passenger ID, the current location of the EV, the pickup location, the destination, and the route. The taxi driver can easily acquire information on the passenger and the route from the information in the image 511. In the case of a self-driving EV, the navigation image 511 does not need to be displayed.

Returning again to FIG. 11A, if the determination at Step S103 is that the distance from the destination to the selected charger is equal to or shorter than the predetermined value (S103: YES), the matching module 223 selects the charger as a charger for charging/discharging the EV. The matching module 223 can select the charger for charging/discharging the EV based on other criteria; for example, the matching module 223 can select the charger for charging/ discharging the EV from the chargers located within a predetermined distance from the destination based on the price of electric power and/or the requested amount of charge/discharge.

The matching module 223 identifies the action requested by the selected charger closest from the destination (S104). If the requested action is charging an EV (S104: Charging), the matching module 223 creates a request acceptable EV list table about the requested action (S105). If the requested action is discharging an EV (S104: Discharging), the matching module 223 creates a request acceptable EV list table about the requested action (S106).

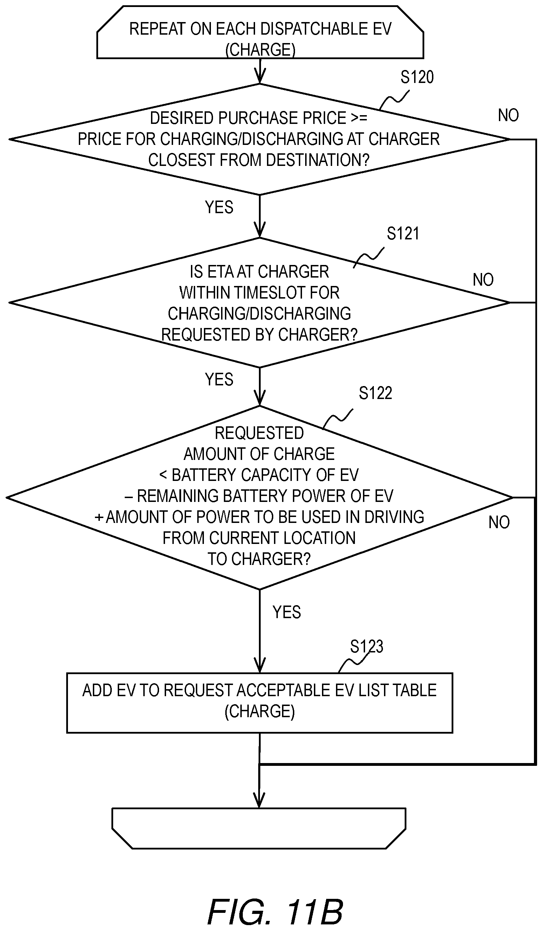

FIG. 11B is a detailed flowchart of Step S105 of creating a request acceptable EV list table about a charge request. The matching module 223 executes this processing on each EV (record) in the dispatchable EV list table 701. First, the matching module 223 determines whether the condition "the desired purchase price >= the price for charging/discharging at the charger closest from the destination" is satisfied (S120). If the desired purchase price of the EV is lower than the price for charging/ discharging at the charger (S120: NO), the matching module 223 determines that the EV cannot accept the charge request.

If the desired purchase price of the EV is equal to or higher than the price for charging/discharging at the charger (S120: YES), the matching module 223 determines whether the ETA of the EV at the charger is within the timeslot for charging/discharging requested by the charger (S121). The matching module 223 determines the route from the current EV location to the charger via the pickup location and the destination and calculates the ETA at the charger. If the ETA is out of the timeslot for charging/discharging requested by the charger (S121: NO), the matching module 223 determines that the EV cannot accept the charge request.

If the ETA is within the timeslot for charging/discharging requested by the charger (S121: YES), the matching module 223 determines whether the condition "the requested amount of charge < the capacity of the battery of the EV - the remaining battery power of the EV + the amount of power to be used in the route from the current location to the charger" is satisfied (S122). To charge the EV in the full requested amount of charge, the battery needs to have a remaining (uncharged) capacity equal to or more than the requested amount of charge. This condition enables charging the EV in the full requested amount of charge.

If the amount of charge requested by the charger is more than the remaining capacity (estimation) of the EV at the arrival at the charger (S122: NO), the matching module 223 determines that the EV cannot accept the charge request. If the amount of charge requested by the charger is less than the remaining capacity (estimation) of the EV at the arrival at the charger (S122: YES), the matching module 223 determines that the EV can accept the charge request of the charger and adds the record of the EV to a request acceptable EV list table (S123).

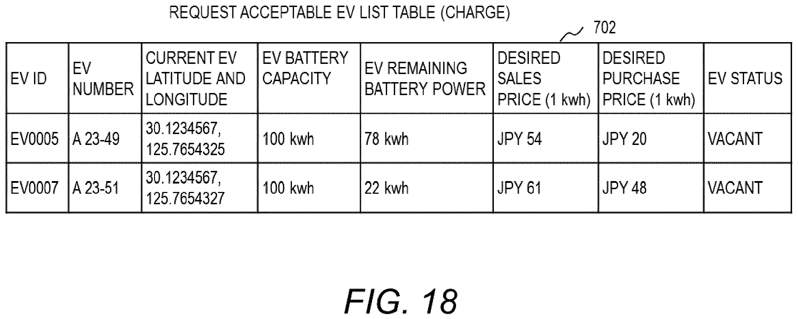

FIG. 18 provides a configuration example of the request acceptable EV list table (charge) 702. As described above, the request acceptable EV list table 702 is a list of EVs that satisfy the conditions of the request for a ride from an EV taxi user and the conditions of the charge/discharge request of the charger closest from the destination.

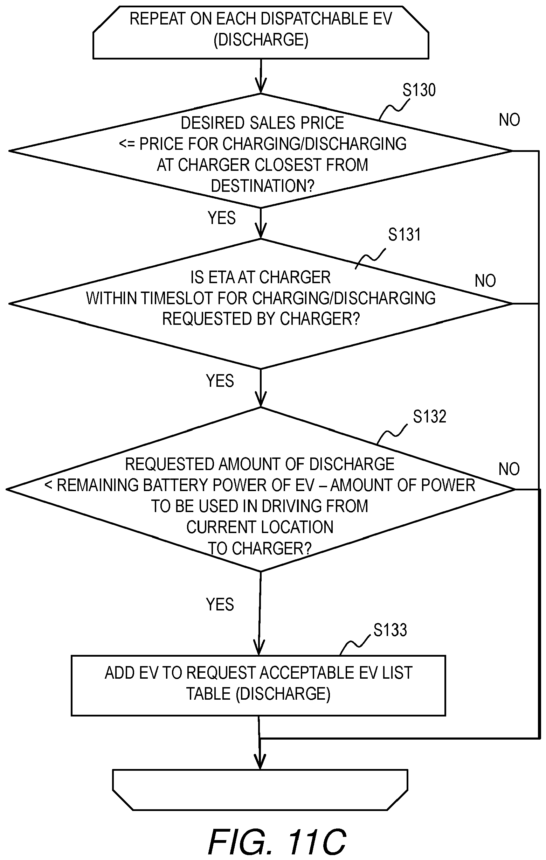

FIG. 11C is a detailed flowchart of Step S106 of creating a request acceptable EV list table about a discharge request. The matching module 223 executes this processing on each EV (record) in the dispatchable EV list table 701. First, the matching module 223 determines whether the condition "the desired sales price <= the price for charging/discharging at the charger closest from the destination" is satisfied (S130). If the desired sales price of the EV is higher than the price for charging/discharging at the charger (S130: NO), the matching module 223 determines that the EV cannot accept the discharge request.

If the desired sales price of the EV is equal to or lower than the price for charging/discharging at the charger (S130: YES), the matching module 223 determines whether the ETA of the EV at the charger is within the timeslot for charging/discharging requested by the charger (S131). The matching module 223 determines the route from the current EV location to the charger via the pickup location and the destination and calculates the ETA at the charger. If the ETA is out of the timeslot for charging/discharging requested by the charger (S131: NO), the matching module 223 determines that the EV cannot accept the charge request.

If the ETA is within the timeslot for charging/discharging of the charger (S131: YES), the matching module 223 determines whether the condition "the requested amount of discharge < the remaining capacity of the battery of the EV - the amount of power to be used in the route from the current location to the charger" is satisfied (S132). Electric power is used in moving from the current location to the destination via the pickup location and further, in reaching the charger. The remaining battery power at arrival at the charger needs to be more than the requested amount of discharge. This condition enables discharging the EV (charging the charger) in the full requested amount of discharge.

If the amount of discharge requested by the charger is equal to or more than the remaining battery power (estimation) of the EV at the arrival at the charger (S132: NO), the matching module 223 determines that the EV cannot accept the discharge request. If the amount of discharge requested by the charger is less than the remaining battery power (estimation) of the EV at the arrival at the charger (S132: YES), the matching module 223 determines that the EV can accept the discharge request of the charger and adds the record of the EV to a request acceptable EV list table (S133).

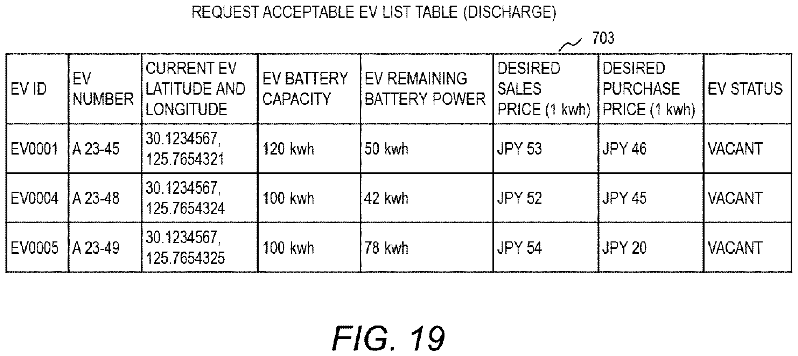

FIG. 19 provides a configuration example of the request acceptable EV list table (discharge) 703. As described above, the request acceptable EV list table 703 is a list of EVs that satisfy the conditions of the request for a ride from an EV taxi user and the conditions of the charge/discharge request of the charger closest from the destination.

Returning again to FIG. 11A, the matching module 223 determines whether the number of request acceptable EVs is larger than 0 at Step S107. If there is no request acceptable EV (S107: NO), the matching module 223 selects the EV taxi closest to the pickup location from the dispatchable EV list table 701 (S112). The matching module 223 can select an EV based on other criteria.

If there are one or more request acceptable EVs (S107: YES), the matching module 223 selects the request acceptable EV closest to the pickup location from the request acceptable EV list table 702 or 703 (S108). As described above, the distance is a pathway distance. This configuration enables an EV taxi to be dispatched to the pickup location fastest and efficiently. The matching module 223 can select an EV based on other criteria.

The matching module 223 forwards information on the selected request acceptable EV, the passenger, and the charger to the information sending module 224 together with a request to send information. The information sending module 224 sends predetermined information to the EV on-board device 4 of the selected EV, the smart device 3 of the passenger, and the charger information service system 5.

The information sending module 224 sends a notice of dispatch to the smart device 3 of the passenger. The format of this notice of dispatch is the same as the format of the notice of dispatch 601 shown in FIG. 14. The information sending module 224 sends a dispatch command to the EV on-board device 4 and sends a notice of charge/discharge to the charger information service system 5.

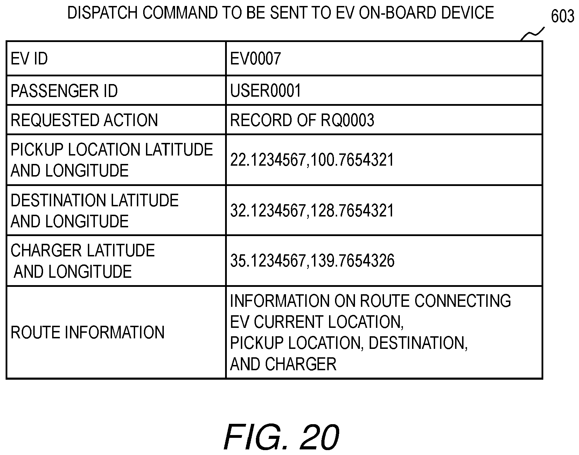

FIG. 20 provides an example of the dispatch command 603 to be sent from the information sending module 224 to the EV on-board device 4 in the case of charge. The dispatch command 603 includes the EV ID of the EV to receive the command, the passenger ID, the charge/discharge request, the latitude and longitude of the pickup location, the latitude and longitude of the destination, and the route information. The route information includes information on the route connecting the current location of the EV, the pickup location, the destination, and the location of the charger.

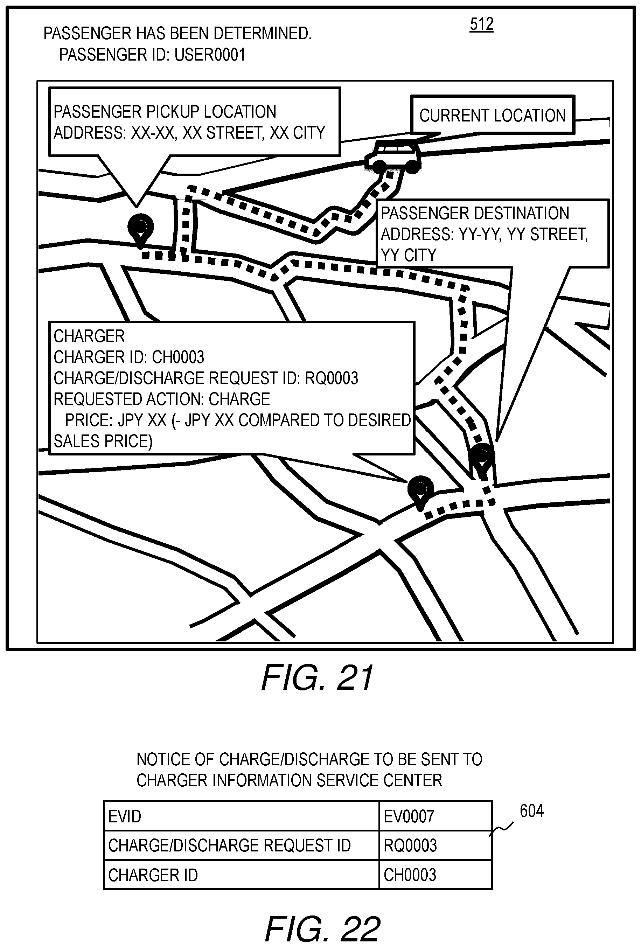

FIG. 21 provides an example of the navigation image 512 the EV on-board device 4 creates and displays in accordance with the dispatch command 603. The navigation image 512 shows the passenger ID, the current location of the EV, the pickup location, the destination, the location of the charger, the route, and information about the charge/discharge request of the charger. The taxi driver can easily acquire information on the passenger, the route, and charge/discharge at the charger from the information in the image 512.

FIG. 22 provides an example of the notice of charge/discharge 604 to be sent to the charger information service system 5 in the case of charge. The notice of charge/discharge 604 includes the EV ID of the EV to be charged/discharged, the charge/discharge request ID of the accepted charge/discharge request, and the charger ID. The charger information service system 5 updates its management information in accordance with the notice from the EV management system 2.

The formats of the information to be sent to the EV on-board device 4, the smart device 3, and the charger information service system 5 in the case of discharge illustrated in FIG. 11C are the same as those in the case of charge. The difference is that the navigation image shows information about discharge, instead of information about charge.

Next, calculation of profits generated by charge/discharge is described. The EV management system 2 performs this calculation. Profits generated by charge/discharge effectively encourage a taxi company to transport electric power with EV taxis. In the example described herein, the charge/discharge profit calculation module 225 calculates daily profits.

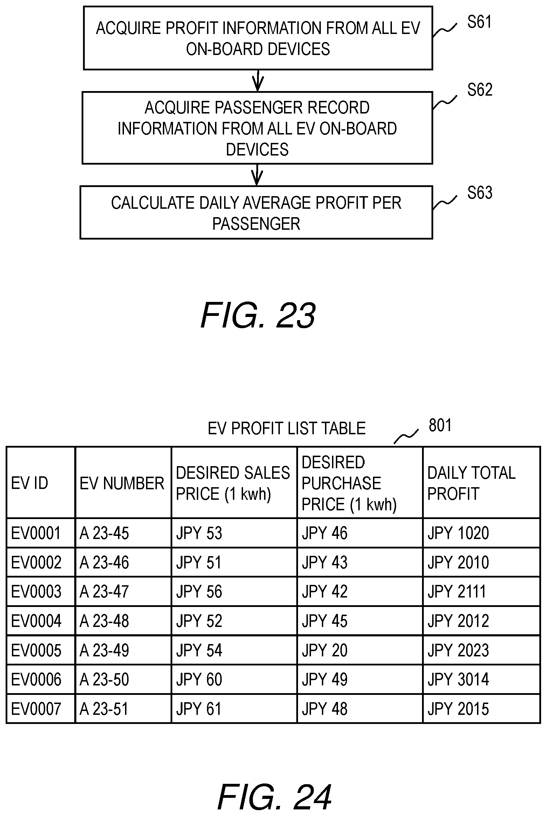

FIG. 23 is a flowchart of an example of processing of the charge/discharge profit calculation module 225. The charge/discharge profit calculation module 225 acquires profit information from all EV on-board devices 4 with the information collection module 222 and creates an EV profit list table (S61). FIG. 24 provides a configuration example of the EV profit list table 801. Each record of the EV profit list table 801 is profit information received from an EV. In this example, the EV profit list table 801 includes the EV ID and the EV number for identifying each EV, the desired sales price and the desired purchase price of each EV, and a daily total profit of each EV. The daily total profit corresponds to the total sales of electric power obtained by discharging - the total amount paid for electric power bought by charging.

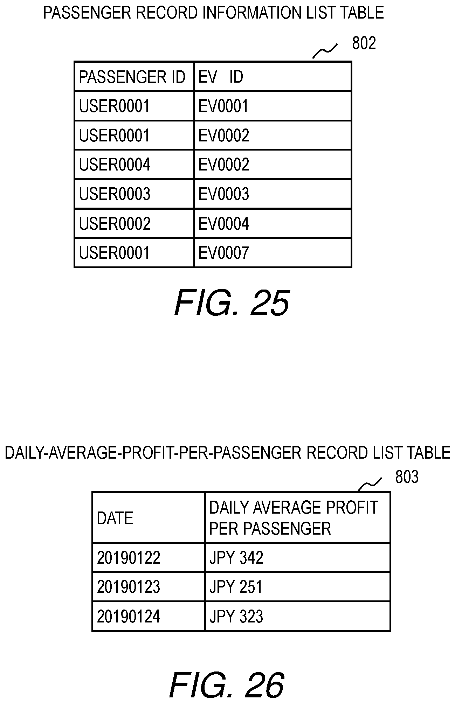

Returning to FIG. 23, the charge/discharge profit calculation module 225 acquires passenger record information from all EV on-board devices 4 with the information collection module 222 and creates a passenger record information list table (S62). FIG. 25 provides a configuration example of the passenger record information list table 802. Each record of the passenger record information list table 802 is the passenger record information received from an EV. In this example, the passenger record information list table 802 indicates the passengers of individual EVs in one day. Each EV and each passenger are indicated by an EV ID and a passenger ID, respectively.

Returning again to FIG. 23, the charge/discharge profit calculation module 225 calculates a daily average profit per passenger (S63). The daily average profit per passenger is calculated by the total sum of the daily total profits of all records in the EV profit list table ÷ the number of passengers in the passenger information record table (which is the total number obtained by counting one ride as one passenger). The charge/discharge profit calculation module 225 inputs the calculated value to a daily-average-profit-per-passenger record list table. FIG. 26 provides an example of the daily-average-profit-per-passenger record list table 803. The daily-average-profit-per-passenger record list table indicates the daily average profit per passenger of each day.

As described above, the EV management system 2 can calculate the daily average profit per passenger. For example, the taxi company may determine a refunding rate (the amount to be reduced from the fare) based on this profit.

The supply-demand ratio of electric power in each area varies with time. The supply and the demand of electric power in an area can be adjusted by managing the requested timeslot for charging/discharging of a charger therein and allocating an EV expected to be able to arrive at the charger within the requested timeslot for charging/discharging. The requested timeslot for charging/discharging does not need to be referred to in selecting an EV to be dispatched.

The price of electric power at a charger is determined depending on the supply-demand ratio of electric power in the corresponding area. The prices of electric power are determined to be higher in an area where the demand is higher than the supply and to be lower in an area where the demand is lower than the supply. The above-described EV allocation based on the prices of electric power at chargers and the sales/purchase prices of electric power of EV taxis achieves not only transporting users to desired destinations but also distributing electric power efficiently by buying electric power at a lower price in an area where the electric power demand is lower and selling electric power at a higher price in an area where the electric power demand is higher.

Further, a taxi company gains profits unfailingly through EV allocation in such a manner that at least charging/discharging an EV does not generate a loss for the EV. Such an advantage provides the taxi company with high incentive to transport electric power with EVs. The taxi company can also refund a part of the gained profit through the fare, so that the users can use taxis with less charges. The prices of electric power do not need to be referred to in selecting an EV to be dispatched.

The amount of charge/discharge requested by a charger can vary depending on the supply-demand ratio of electric power in the area. The supply and demand of electric power in an area equipped with a charger can be effectively adjusted by charging/discharging an EV that is able to achieve the amount of charge/discharge requested by the charger (or an EV that is able to charge/discharge in the requested amount). The EV can be selected based on the route and the information on EVs as described above. The amount of charge/discharge requested by a charger does not need to be referred to in selecting an EV to be dispatched.

The above-described system example manages allocation of EV taxis for transporting a person (passenger) to a destination. The features of this embodiment and other embodiments are applicable to allocation of EVs for transporting objects. As described above, the EV management system selects a charge/discharge request of one charger from charge/discharge request management information managing charge/discharge requests of a plurality of chargers based on the destination of an EV and the location of the charger and instructs the EV for transporting objects to the destination to respond to the charge/discharge request. This configuration enables adjustment of the supply and demand of electric power in another area without interfering with the EV transporting objects.

### EMBODIMENT 2

Hereinafter, another example of matching is described. In the example described in the following, the EV discharges at a charger close to the destination and then moves to another charger to charge. This configuration prevents the remaining battery power of the EV from becoming too little because of the discharge. In the following, differences from the matching in Embodiment 1 are mainly described. In this embodiment, the processing to respond to a discharge request of a charger is different from the processing in Embodiment 1 (Fig. 11C). The processing in Embodiment 2 in the case where the requested action is charging an EV is the same as the processing in Embodiment 1.

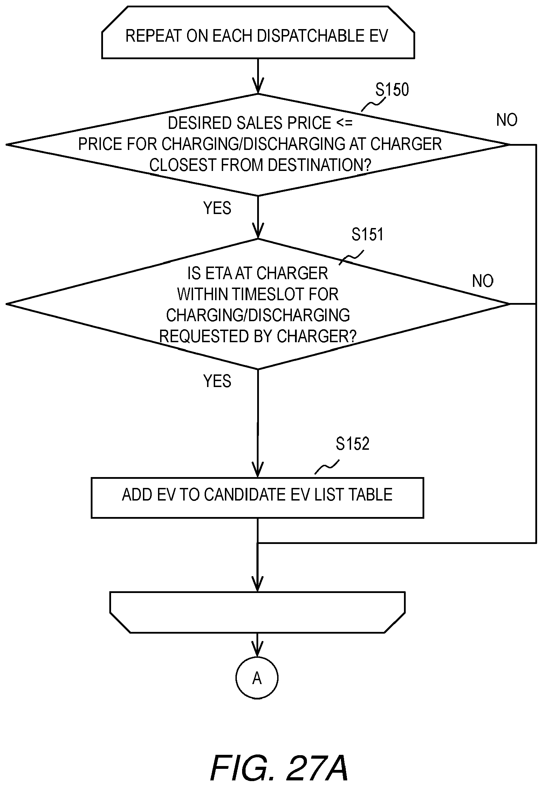

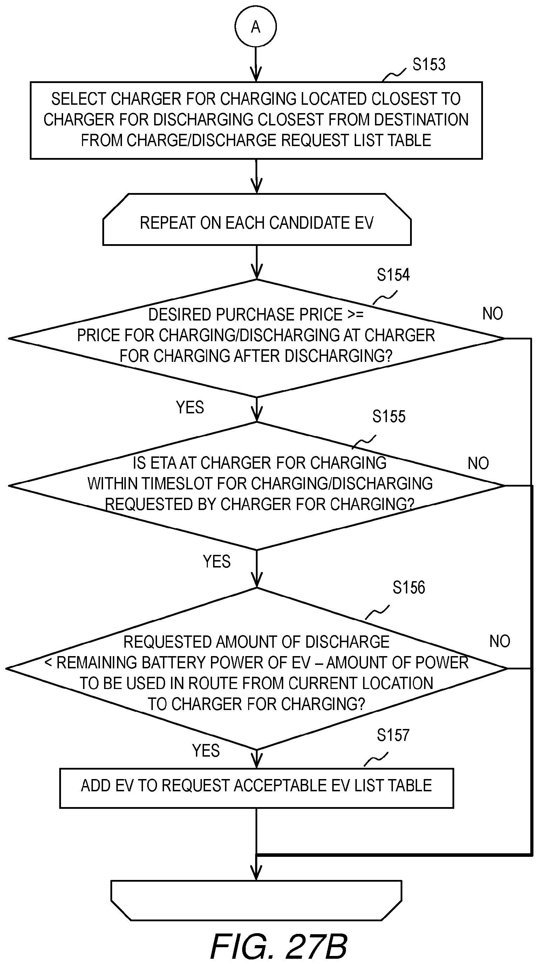

FIGS. 27A and 27B are a flowchart of the matching an EV and chargers in response to a discharge request of a charger so that the EV can discharge to the charger and subsequently charge from another charger. The flowchart of FIG. 27A is connected with the flowchart of FIG. 27B by a combinator.

FIG. 27A is a flowchart of selecting EVs (dischargeable EVs) that can discharge to the charger requesting discharge from dispatchable EVs. The method of selecting dispatchable EVs is the same as the one in Embodiment 1. FIG. 27B is a flowchart of selecting EVs (chargeable EVs) that have remaining battery power enough to meet the discharge request and further, are able to charge from another charger (charger for charging) after discharging from candidate EVs.

With reference to FIG. 27A, the matching module 223 executes Steps S150, S151, and S152 on each dispatchable EVs. First, the matching module 223 determines whether the condition "the desired sales price <= the price for charging/discharging at the charger closest from the destination" is satisfied (S150). If the desired sales price of the EV is higher than the price for charging/discharging at the charger (S150: NO), the matching module 223 determines that the EV cannot accept the discharge request.

If the desired sales price of the EV is equal to or lower than the price for charging/discharging at the charger (S150: YES), the matching module 223 determines whether the ETA of the EV at the charger is within the timeslot for charging/discharging requested by the charger (S151). The matching module 223 determines the route from the current EV location to the charger via the pickup location and the destination and calculates the ETA at the charger. If the ETA is out of the timeslot for charging/discharging requested by the charger (S151: NO), the matching module 223 determines that the EV cannot accept the charge request.

If the ETA is within the timeslot for charging/discharging requested by the charger (S151: YES), the matching module 223 determines that this EV is a candidate EV to accept the discharge request and adds the record of the EV to a candidate EV list table (S152).

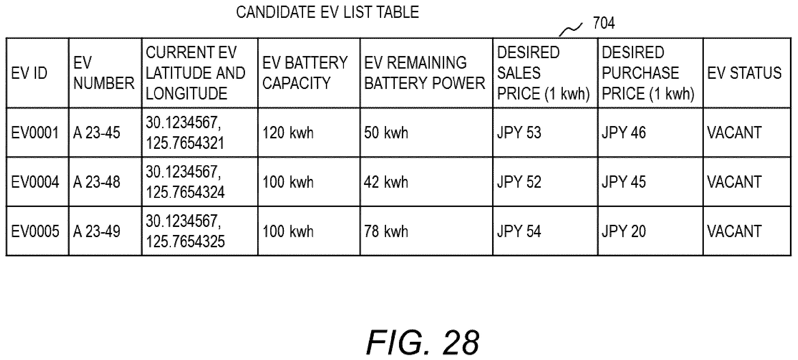

FIG. 28 provides a configuration example of the candidate EV list table 704. As described above, the candidate EV list table 704 shows EVs that satisfy the price condition of the charger (charger for discharging) closest to the destination and requesting discharging among the dispatchable EVs that can meet the user's request for a ride. Whether the EVs in the candidate EV list table 704 have remaining battery power enough to meet the charge/discharge request is unknown.

With reference to FIG. 27B, the matching module 223 selects a charger (charger for charging) that is closest to the charger for discharging located closest to the destination and is requesting charging from the charge/discharge request list table 231. Next, the matching module 223 executes Steps S154 to S157 on each candidate EV in the candidate EV list table 704.

First, the matching module 223 determines whether the condition "the desired purchase price >= the price for charging/discharging at the charger for charging after discharging" (S154). If the desired purchase price of the EV is lower than the price for charging/discharging at the charger (S154: NO), the matching module 223 determines that the EV cannot accept the charge request.

If the desired purchase price of the EV is equal to or higher than the price for charging/discharging at the charger for charging (S154: YES), the matching module 223 determines whether the ETA of the EV at the charger is within the timeslot for charging/discharging requested by the charger (S155). The matching module 223 determines the route from the current EV location to the charger for charging via the pickup location, the destination, and the charger for discharging and calculates the ETA at the charger for charging. The time required for discharging at the charger for discharging can be determined in accordance with the predetermined relation between the amount of discharge and the time required for discharging.

If the ETA is out of the timeslot for charging/ discharging requested by the charger for charging (S155: NO), the matching module 223 determines that the EV cannot accept the charge request. If the ETA is within the timeslot for charging/discharging requested by the charger for charging (S155: YES), the matching module 223 determines whether the condition "the amount of discharge requested by the charger for discharging < the remaining battery power of the EV - the amount of power to be used in the route from the current location to the charger for discharging" is satisfied (S156). This condition enables the EV to discharge at the charger for discharging and further, to reach the charger for charging.

If the amount of discharge requested by the charger for discharging is equal to or more than the remaining battery power (estimation) when the EV arrives at the charger for charging (S156: NO), the matching module 223 determines that the EV cannot accept the discharge request. If the amount of discharge requested by the charger for discharging is less than the remaining battery power (estimation) when the EV arrives at the charger for charging

(S156: YES), the matching module 223 determines that the EV can accept the discharge request and adds the record of the EV to the request acceptable EV list table (S157). Selecting an EV to be actually dispatched from the request acceptable EV list table is the same as the one in Embodiment 1.

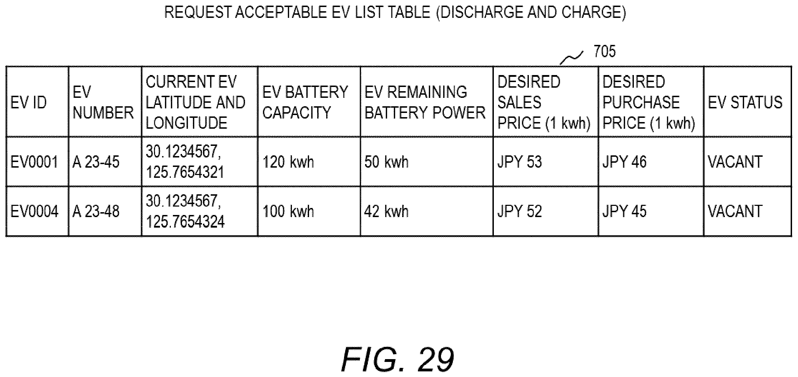

FIG. 29 provides a configuration example of the request acceptable EV list table 705. As described above, the request acceptable EV list table 705 shows EVs that satisfy the conditions (the price, the amount of discharge, and the timeslot for discharging) requested by the charger for discharging and further, is able to arrive at the charger for charging located closest to the charger for discharging and having issued a charge request.

The EVs in the request acceptable EV list table 705 may not be able to charge in the amount requested by the charger for charging. However, this configuration of the request acceptable EV list table 705 saves the EVs from trouble in driving, independently from the remaining capacity of the battery of the EV after discharging. Selecting request acceptable EVs may select EVs that satisfy the condition on the amount of charge requested by the charger for charging.

The information sending module 224 sends necessary information to the smart device 3, the charger information service system 5, and the EV on-board device 4. The format of the notice of dispatch to be sent to the smart device 3 is the same as the one in Embodiment 1.

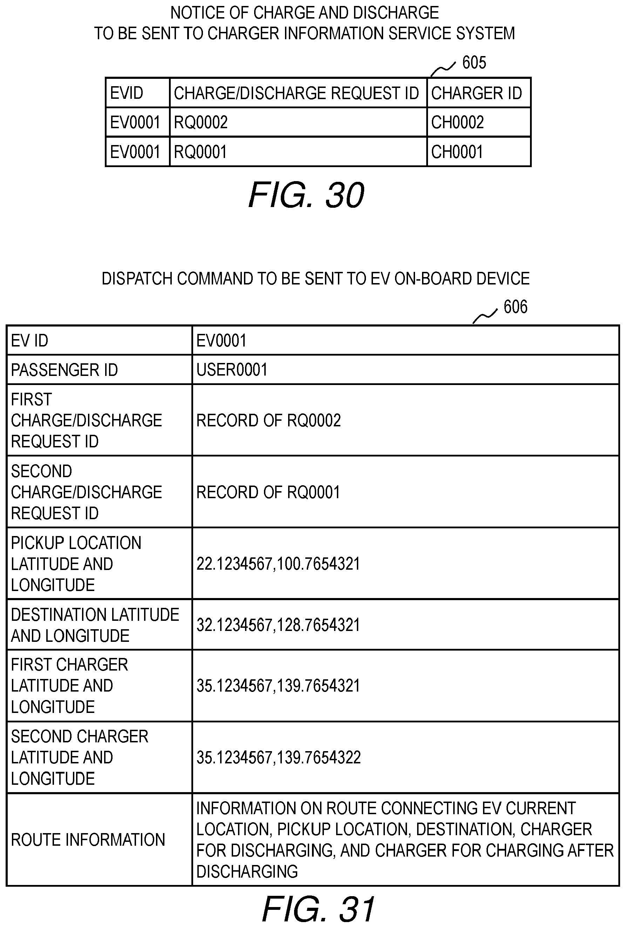

FIG. 30 provides an example of the notice of charge/discharge 605 to be sent by the information sending module 224 to the charger information service system 5 when the EV to be dispatched is selected. Since the EV is scheduled to discharge and charge at two different charges as described above, the notice of charge/discharge 605 includes information on discharge and charge. Specifically, the notice of charge/discharge 605 includes a record of charge and a record of discharge. The record of discharge includes the EV ID of the EV to discharge, the ID of the charge/discharge request requesting discharge, and the ID of the charger requesting discharge. In similar, the record of charge includes the EV ID of the EV to charge, the ID of the charge/discharge request requesting charge, and the ID of the charger requesting charge.

FIG. 31 provides an example of the dispatch commend 606 to be sent from the information sending module 224 to the EV on-board device 4 in the case of discharge and charge. Compared to the dispatch command 603 in the case of charge in Embodiment 1, the dispatch command 606 includes two charge/discharge requests and information on the corresponding chargers. The first charge/discharge request is the first request for discharge and the second charge/discharge request is the request for charge following to the discharge. The first charger is the charger for the first discharging and the second charger is the charger for the subsequent charging. The route information indicates the route from the current location to the charger for charging at the end.

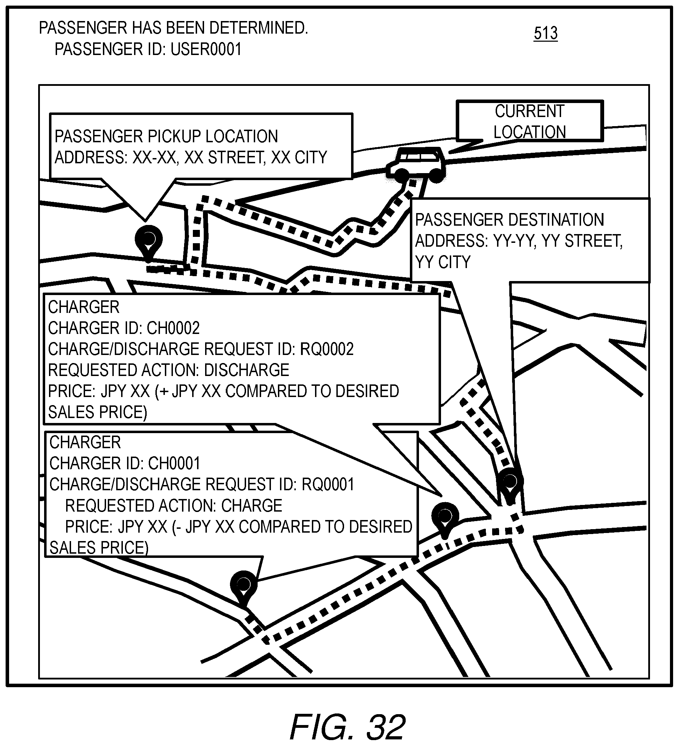

FIG. 32 provides an example of the navigation image 513 to be displayed on the EV on-board device 4 in accordance with the dispatch command 606 in FIG. 31. The navigation image 513 shows the passenger ID, the current location of the EV, the pickup location, the destination, the locations of the chargers, the route, and information of the charge/discharge requests from the two chargers. The taxi driver can easily acquire information on the passenger, the route, and charge and discharge at two chargers from the information in the image 513.

As described above, when the requested action in the charge/discharge request is discharge, sending information on a charger for charging after the discharge ensures that the EV will have electric power required to keep providing its service. The requested discharge and charge can be pursued without fail by selecting an EV that is able to satisfy the requested amounts of charge and discharge and reach the charger for charging based on the route to the charger for charging, the capacity of the battery of the EV, and the remaining battery power of the EV.

It should be noted that this invention is not limited to the above-described embodiments but include various modifications. For example, the above-described embodiments provide details for the sake of better understanding of this invention; they are not limited to those including all the configurations as described. A part of the configuration of an embodiment may be replaced with a configuration of another embodiment or a configuration of an embodiment may be incorporated to a configuration of another embodiment. A part of the configuration of an embodiment may be added, deleted, or replaced by that of a different configuration.

The above-described configurations, functions, and processing units, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card or an SD card.

The drawings show control lines and information lines as considered necessary for explanations but do not show all control lines or information lines in the products. It can be considered that most of all components are actually interconnected.

## Claims

1. An electric vehicle (EV) management system configured to manage a plurality of EVs, the EV management system comprising:
one or more processors; and
one or more storage devices storing a program to be executed by the one or more processors,
wherein the one or more storage devices store charge/discharge request management information configured to manage charge/discharge requests from a plurality of chargers,
wherein each of the charge/discharge requests indicates a location of a charger and a requested action specifying either charging an EV or discharging an EV, and
wherein the one or more processors are configured to:
identify a destination of transport;
select a first charge/discharge request of a first charger from the charge/discharge request management information, based on the destination and the locations of the plurality of chargers;
select a first EV for pursuing the transport to the destination from the plurality of EVs; and
instruct the first EV to respond to the first charge/discharge request.

2. The EV management system according to claim 1,
wherein each of the charge/discharge requests indicates a requested timeslot for charging/discharging, and
wherein the one or more processors are configured to select the first EV as an EV expected to arrive at the first charger within the requested timeslot for charging/discharging indicated in the first charge/discharge request.

3. The EV management system according to claim 1,
wherein each of the charge/discharge requests indicates a requested amount of charge/discharge,
wherein the one or more storage devices store EV management information configured to manage the plurality of EVs,
wherein the EV management information indicates a current location, a battery capacity, and a remaining battery power of each of the plurality of EVs, and
wherein the one or more processors are configured to:
determine a route from the current location of the first EV to the first charger based on the current location of the first EV indicated in the EV management information, the location of the destination, and the location of the first charger indicated in the charge/discharge request management information; and
select the first EV as an EV that is able to satisfy the requested amount of charge/discharge indicated in the first charge/discharge request based on the route and the information on the first EV indicated in the EV management information.

4. The EV management system according to claim 1,
wherein the one or more storage devices store EV management information configured to manage the plurality of EVs,
wherein the EV management information indicates a sales price of electric power and a purchase price of electric power of each of the plurality of EVs,
wherein each of the charge/discharge requests indicates a price of electric power, and
wherein the one or more processors are configured to select the first EV as an EV for which at least a loss is not generated by purchasing or selling electric power in accordance with the first charge/discharge request.

5. The EV management system according to claim 1,
wherein the one or more storage devices store EV management information configured to manage the plurality of EVs,
wherein the EV management information indicates a current location of each of the plurality of EVs, and
wherein the one or more processors are configured to:
receive a request for a ride specifying a pickup location and the destination of transport; and
select the first EV based on the pickup location and the current locations of the plurality of EVs indicated in the EV management information.

6. The EV management system according to claim 1, wherein the one or more processors are configured to send information on a second charger to the first EV in order for the first EV to charge after responding to the first charge/discharge request in a case where the requested action specified in the first charge/discharge request is discharging an EV.

7. An EV management system according to claim 6,
wherein each of the charge/discharge requests indicates a requested amount of charge/discharge,
wherein the one or more storage devices store EV management information configured to manage the plurality of EVs,
wherein the EV management information indicates a current location, a battery capacity, and a remaining battery power of each of the plurality of EVs, and
wherein the one or more processors are configured to:
determine a route from the current location of the first EV to the second charger based on the current location of the first EV indicated in the EV management information, the location of the destination, and the locations of the first charger and the second charger indicated in the charge/discharge request management information; and
select the first EV as an EV that is able to satisfy the requested amount of charge/discharge indicated in the first charge/discharge request and reach the second charger, based on the route and the information on the first EV indicated in the EV management information.

8. A method for an electric vehicle (EV) management system to manage a plurality of EVs,
the EV management system storing charge/discharge request management information configured to manage charge/discharge requests of a plurality of chargers,
each of the charge/discharge requests including a location of a charger and a requested action specifying either charging an EV or discharging an EV, and
the method comprising:
identifying, by the EV management system, a destination of transport;
selecting, by the EV management system, a first charge/discharge request of a first charger from the charge/discharge request management information based on the destination and the locations of the plurality of chargers;
selecting, by the EV management system, a first EV to pursue the transport to the destination from the plurality of EVs; and
instructing, by the EV management system, the first EV to respond to the first charge/discharge request.
